# EUROPEAN PATENT APPLICATION

(11) **EP 3 937 554 A1**
(43) Date of publication of application: **12.01.2022**
(21) Application number: 19922476.7
(22) Date of filing: 04.04.2019
(51) Int. Cl.: H04W 56/00, H04W 72/04

(54) **SIGNAL TRANSMISSION METHOD AND APPARATUS, AND NETWORK DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Manitz Finsterwald Patent- und Rechtsanwaltspartnerschaft mbB
(86) International application number: PCT/CN2019/081572
(87) International publication number: WO 2020/199213

(57) **Abstract**

Provided are a signal transmission method and apparatus, and a network device. The method comprises: a first base station determining first configuration information and second configuration information, wherein the first configuration information is used for determining a first time window for measuring a first signal, and the second configuration information is used for determining a second time window for sending a second signal; and the first base station determining that an overlapping portion between the first time window and the second time window is used for measuring the first signal or is used for sending the second signal.

## Description

### TECHNICAL FIELD

Embodiments of the disclosure relate to the technical field of mobile communications, and more particularly to a signal transmission method and device, and a network device.

### BACKGROUND

At present, an Integrated Access and Backhaul (IAB) base station is configured with SS/PBCH Block Measurement Time Configuration (SMTC) and SS/PBCH Block Transmission Configuration (STC) respectively. The SMTC is used to determine a receiving window (referred to as SMTC window) of a Synchronization Signal Block (SSB), and the STC is used to determine a sending window (referred to as STC window) of the SSB. Because the SMTC and the STC are configured independently, the SMTC and the STC obtained by the IAB base station cannot guarantee that the SMTC window and the STC window do not overlap temporally at any time. After the SMTC window and the STC window overlap temporally, the behavior of the IAB base station cannot be determined.

### SUMMARY

The embodiments of the disclosure provide a signal transmission method and device, and a network device.

The signal transmission method provided by the embodiments of the disclosure may include the following operations.

A first base station determines first configuration information and second configuration information, the first configuration information being used to determine a first time window for measuring a first signal, and the second configuration information being used to determine a second time window for sending a second signal.

The first base station determines whether an overlapping part between the first time window and the second time window is used to measure the first signal or send the second signal.

The signal transmission device provided by the embodiments of the disclosure may include a first determining unit and a second determining unit.

The first determining unit is configured to determine the first configuration information and the second configuration information, the first configuration information being used to determine the first time window for measuring the first signal, and the second configuration information being used to determine the second time window for sending the second signal.

The second determining unit is configured to determine whether an overlapping part between the first time window and the second time window is used to measure the first signal or send the second signal.

The network device provided in the embodiments of the disclosure may include a processor and a memory. The memory is configured to store a computer program, and the processor may be configured to call and run the computer program stored in the memory to perform the signal transmission method.

The chip provided in the embodiments of the disclosure is configured to implement the signal transmission method.

Specifically, the chip may include a processor, configured to call and run a computer program in a memory to enable a device installed with the chip to perform the signal transmission method.

The computer-readable storage medium provided in the embodiments of the disclosure is configured to store a computer program causing a computer to perform the signal transmission method.

The computer program product provided in the embodiments of the disclosure may include a computer program instruction causing a computer to perform the signal transmission method.

When running in a computer, the computer program provided in the embodiments of the disclosure enables the computer to perform the signal transmission method.

Through the above technical solution, when the first time window (namely SMTC window) and the second time window (namely STC window) configured to the first base station (for example, an IAB base station) overlap, the behavior of sending and receiving the SSB of the IAB base station is clarified, the reliability of establishing a backhaul link of an IAB system is improved, and a time delay is reduced.

### BRIEF DESCRIPTION OF THE DRAWINGS

The accompanying drawings described here are used for providing further understanding of the disclosure, and constitute a part of the disclosure. Schematic embodiments of the disclosure and description thereof are used for illustrating the disclosure and not intended to form an improper limit to the disclosure. In the accompanying drawings:
FIG. 1 is a schematic diagram of a communication system architecture provided by an embodiment of the disclosure;
FIG. 2 is a first schematic diagram of network structure of an IAB system provided by an embodiment of the disclosure;
FIG. 3 is a second schematic diagram of network structure of an IAB system provided by an embodiment of the disclosure;
FIG. 4 is a flowchart of a signal transmission method provided by an embodiment of the disclosure;
FIG. 5 is a first pattern of SMTC and STC provided by an embodiment of the disclosure;
FIG. 6 is a second pattern of SMTC and STC provided by an embodiment of the disclosure;
FIG. 7 is a schematic diagram of multi-hop of an IAB base station provided by an embodiment of the disclosure;
FIG. 8 is a structural schematic diagram of a signal transmission device provided by an embodiment of the disclosure;
FIG. 9 is a schematic structure diagram of a network device provided by an embodiment of the disclosure;
FIG. 10 is a schematic structure diagram of a chip according to an embodiment of the disclosure; and
FIG. 11 is a schematic block diagram of a communication system provided by an embodiment of the disclosure.

### DETAILED DESCRIPTION

The technical solutions in the embodiments of the disclosure will be described below in combination with the drawings in the embodiments of the disclosure. It is apparent that the described embodiments are not all embodiments but part of embodiments of the disclosure. All other embodiments obtained by those of ordinary skill in the art based on the embodiments in the disclosure without creative work shall fall within the scope of protection of the disclosure.

The technical solutions of the embodiments of the disclosure may be applied to various communication systems, for example, a Global System of Mobile communication (GSM), a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD), a Universal Mobile Telecommunication System (UMTS), a Worldwide Interoperability for Microwave Access (WiMAX) communication system or a 5G system.

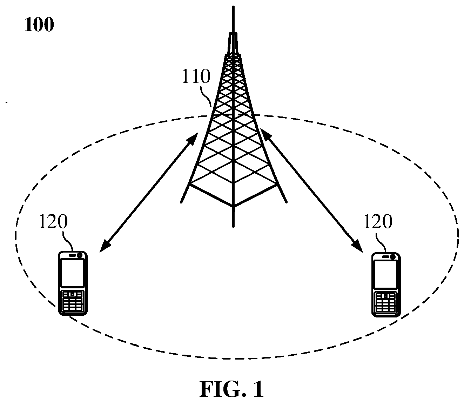

Exemplarily, a communication system 100 that the embodiments of the disclosure are applied to is shown in FIG. 1. The communication system 100 may include a network device 110, and the network device 110 may be a device communicating with a terminal 120 (or referred to as a communication terminal and a terminal). The network device 110 may provide communication coverage for a specific geographical region and may communicate with a terminal located in the coverage. Optionally, the network device 110 may be a Base Transceiver Station (BTS) in the GSM or the CDMA system, may also be a NodeB (NB) in the WCDMA system, and may further be an Evolutional Node B (eNB or eNodeB) in the LTE system or a wireless controller in a Cloud Radio Access Network (CRAN). Or the network device may be a mobile switching center, a relay station, an access point, a vehicle device, a wearable device, a hub, a switch, a network bridge, a router, a network-side device in a 5G network, a network device in a future evolved Public Land Mobile Network (PLMN) or the like.

The communication system 100 further includes at least one terminal 120 within the coverage of the network device 110. The "terminal" used herein includes, but not limited to, a device configured to receive/send a communication signal through a wired line connection, for example, through Public Switched Telephone Network (PSTN), Digital Subscriber Line (DSL), digital cable and direct cable connections, and/or another data connection/network) and/or through a wireless interface, for example, for a cellular network, a Wireless Local Area Network (WLAN), a digital television network like a Digital Video Broadcasting-Handheld (DVB-H) network, a satellite network and an Amplitude Modulated (AM)-Frequency Modulated (FM) broadcast transmitter, and/or another terminal, and/or an Internet of Things (IoT) device. The terminal configured to communicate through a wireless interface may be referred to as a "wireless communication terminal", a "wireless terminal" or a "mobile terminal." Examples of the mobile terminal include, but not limited to, a satellite or cellular telephone, a Personal Communication System (PCS) terminal capable of combining a cellular radio telephone and data processing, faxing and data communication capabilities, a Personal Digital Assistant (PDA) capable of including a radio telephone, a pager, Internet/intranet access, a Web browser, a notepad, a calendar and/or a Global Positioning System (GPS) receiver, and a conventional laptop and/or palmtop receiver or another electronic device including a radio telephone transceiver. The terminal may refer to an access terminal, UE, a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a PDA, a handheld device with a wireless communication function, a computing device, another processing device connected to a wireless modem, a vehicle device, a wearable device, a terminal in the 5G network, a terminal in the future evolved PLMN or the like.

Optionally, Device to Device (D2D) communication may be performed between the terminals 120.

Optionally, the 5G system or the 5G network may also be referred to as an NR system or an NR network.

A network device and two terminals are exemplarily shown in FIG. 1. Optionally, the communication system 100 may include multiple network devices and another number of terminals may be included in coverage of each network device. There are no limits made thereto in the embodiments of the disclosure.

Optionally, the communication system 100 may further include another network entity such as a network controller and a mobility management entity. No limits are made thereto in the embodiments of the disclosure.

It is to be understood that a device with a communication function in the network/system in the embodiments of the disclosure may be referred to as a communication device. For example, for the communication system 100 shown in FIG. 1, communication devices may include the network device 110 and terminal 120 with the communication function, and the network device 110 and the terminal 120 may be the specific devices mentioned above and will not be elaborated herein. The communication devices may further include other devices in the communication system 100, for example, other network entities like a network controller and a mobility management entity. There are no limits made thereto in the embodiments of the disclosure.

It is to be understood that terms "system" and "network" in the disclosure may usually be exchanged in the disclosure. In the disclosure, term "and/or" is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

For the convenience of understanding the technical solutions in the embodiments of the disclosure, the relevant technologies involved in the embodiments of the disclosure are described below.

### 1) IAB base station

An IAB base station is a base station providing users with wireless access, which needs to be connected to a core network or other base stations through a backhaul link. A general backhaul link adopts wired backhaul, for example, an optical fiber. The backhaul link implements the connection between a base station and a core network or other base stations, and is used for backhaul of data. A wireless backhaul link mainly adopts microwave backhaul, and is an important means of transmission in a scenario without the optical fiber. At present, 50 to 60 percent of mobile base stations in the world perform backhaul through microwave. With the acceleration of 5G deployment, requirements for network capacity, complexity and delay are higher, the number of mobile base stations will also increase, and the application scope of wireless backhaul will continue to expand.

Compared with LTE, the 5G NR technology can use a greater bandwidth, such as a millimeter wave band, and can be applied to a large-scale antenna and multi-beam system, so the 5G can provide a higher system rate to provide conditions for the application of IAB. The IAB base station is a base station which is integrated with a wireless access link and a wireless backhaul link. The access link is a communication link between UE and the IAB base station, and the backhaul link is a communication link between the IAB base stations, so the IAB base station does not require a wired transmission network to perform data backhaul. Based on this, the IAB base station is deployed in a dense and complex scenario more easily, which reduces the burden of deploying a wired transmission network.

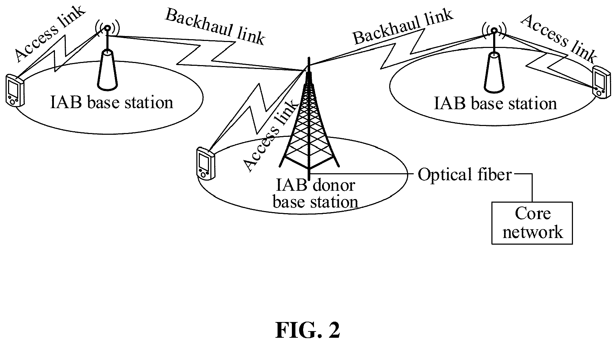

As shown in FIG. 2, the IAB base station provides a wireless access function of wireless access and access services for UE. An IAB donor base station provides a wireless backhaul function to the IAB base station, and provides an interface between the UE and the core network. It can be seen from FIG. 2 that there is a wired connection between the IAB donor base station and the core network, there is no wired connection between the IAB base station and the core network, and the IAB base station is connected to the IAB donor base station through the backhaul link, so that the UE is connected with the core network.

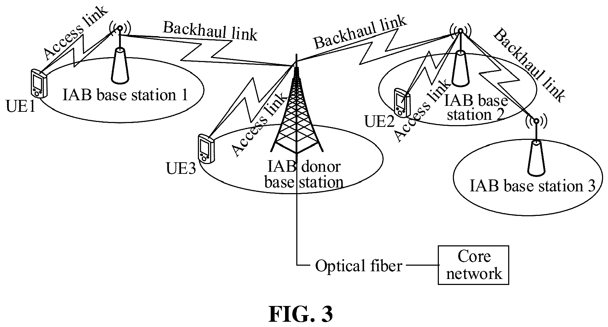

In addition, if an IAB base station controls and schedules another IAB base station, the IAB base station may be referred to as a parent node, that is, the IAB base station is the parent node of another IAB base station. As shown in FIG. 3, the IAB base station 2 may be referred to as the parent node, which is the parent node of the IAB base station 3. If an IAB base station is under the control of another IAB base station, the IAB base station may be referred to as a child node, that is, the IAB base station is the child node of another IAB base station. As shown in FIG. 3, each of the IAB base station 1, the IAB base station 2 and the IAB base station 3 may be referred to as the child node, the IAB base station 1 and the IAB base station 2 are the child nodes of the IAB donor base station, and the IAB base station 3 is the child node of the IAB base station 2. It is apparent that one same IAB base station may be both a parent node and a child node. In addition, the IAB donor base station can only be the parent node. In FIG. 3, the IAB donor base station is the parent node of the IAB base station 1 and the IAB base station 2. For the IAB base station, due to the limitation of half duplex, the IAB base station cannot receive and send data on both the backhaul link and the access link, that is, when receiving data on the backhaul link, the IAB base station cannot send data on the access link, and when sending data on the backhaul link to the parent node, the IAB base station cannot receive data on the access link. As shown in FIG. 3, when receiving backhaul link data of its parent node (the IAB donor base station may be treated as the IAB base station in the topology), the IAB base station 1 cannot send data to UE1 through the access link. When the IAB base station 2 sends data to its parent node (the IAB donor base station) through the backhaul link, it cannot receive the data which is sent by the UE1 through the access link.

For an IAB base station, it may not be the IAB donor base station directly connected to the core network, so the IAB base station needs to establish the backhaul link with the IAB donor base station to establish a connection with the core network. Such manner is referred to as multi-hop. For example, in FIG. 3, the backhaul link is established between the IAB base station 3 and the IAB base station 2, the backhaul link is established between the IAB base station 2 and the IAB donor base station, and the backhaul link is established between the IAB base station 3 and the IAB donor base station through 2 hops.

### 2) SMTC

It is defined in the Rel-15 NR technology that the SMTC is used to indicate a time window for the UE to measure an SSB. The SMTC includes period, offset, and length of time window, as shown below. By configuring the SMTC, power consumption of measurement by the UE may be reduced. The UE measures the SSB only in the configured time window.

```
 SSB-MTC ::= SEQUENCE {
 periodicityAndOffset CHOICE {
 sf5 INTEGER (0..4),
 sf10 INTEGER (0..9),
 sf20 INTEGER (0..19),
 sf40 INTEGER (0..39),
 sf80 INTEGER (0..79),
 sf160 INTEGER (0..159)
 },
 duration ENUMERATED { sf1, sf2, sf3, sf4, sf5 }
 }
```

### 3) Discovery and measurement between the IAB base stations

In an IAB system, it is needed to perform discovery and measurement between the IAB base stations, so as to establish the backhaul link. The discovery and measurement may be based on the SSB. For an IAB base station, it needs to be configured with an SMTC window for the IAB base station to discover and measure the SSB sent by other IAB base stations. Meanwhile, the IAB base station also needs to be configured with an STC window for it to send the SSB, which is further used by other IAB base stations to perform discovery and measurement. The STC is similar to the SMTC, including the length of time window sent by the SSB, and the period and offset of the time window.

At present, an IAB base station is configured with the SMTC and the STC respectively, that is, a receiving window of SSB and a sending window of SSB. The purpose of this is to configure the behavior of different IAB base stations in a multi-hop IAB system, thereby avoiding the limitation of half duplex. The IAB base station cannot measure the SSB of other IAB base stations while sending the SSB for the other IAB base stations to perform discovery and measurement. However, because the SMTC and the STC are configured independently, the SMTC and the STC obtained by the IAB base station cannot guarantee that the SMTC window and the STC window do not overlap temporally at any time. For example, if the SMTC and the STC have the same period and different offsets, the SMTC window and the STC window may overlap due to their different lengths. For another example, if the SMTC and the STC have different periods, the SMTC window and the STC window may overlap at some time points. After the SMTC window and the STC window overlap, the behavior of the IAB base station needs to be specified. In order to specify the behavior of the IAB base station, the following technical solutions of the embodiments of the disclosure are provided.

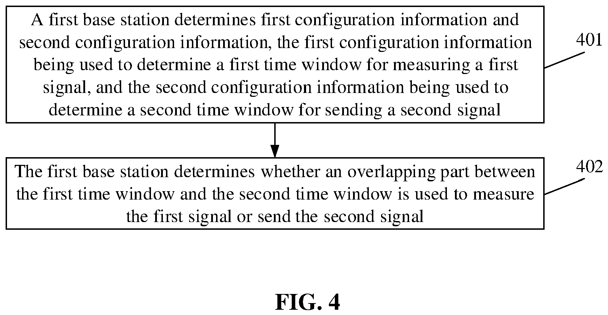

FIG. 4 is a flowchart of a signal transmission method provided by an embodiment of the disclosure. As shown in FIG. 4, the signal transmission method may include the following steps.

At Step 401, a first base station determines first configuration information and second configuration information, the first configuration information being used to determine a first time window for measuring a first signal, and the second configuration information being used to determine a second time window for sending a second signal.

In an implementation of the disclosure, the first base station receives the first configuration information and the second configuration information sent by the second base station, and the first base station and the second base station are IAB base stations. The second base station is the parent node of the first base station, that is, the second base station can control and schedule the first base station.

In another implementation of the disclosure, the first base station itself determines the first configuration information and the second configuration information.

In an implementation of the disclosure, the first configuration information is the SMTC, and is used to determine the first time window (namely, the SMTC window) for measuring the first signal. In an example, the first configuration information includes the length of time window for measuring the first signal, and the period and offset of the time window.

In an implementation of the disclosure, the second configuration information is the STC, and is used to determine the second time window (namely, the STC window) for sending the second signal. In an example, the second configuration information includes the length of time window for sending the second signal, and the period and offset of the time window.

In the above solution, the first signal is the SSB measured by the first base station, and the second signal is the SSB sent by the first base station.

In a specific application scenario, in the IAB system, it is needed to perform discovery and measurement between the IAB base stations, so as to establish the backhaul link. The discovery and measurement may be based on the SSB. For an IAB base station, it needs to be configured with an SMTC window for the IAB base station to discover and measure the SSB sent by other IAB base stations. Meanwhile, the IAB base station also needs to be configured with an STC window for it to send the SSB, which is further used by other IAB base stations to perform discovery and measurement.

At Step 402, the first base station determines whether an overlapping part between the first time window and the second time window is used to measure the first signal or send the second signal.

In the embodiments of the disclosure, the first base station may determine, according to priorities of the first time window and the second time window, whether the overlapping part between the first time window and the second time window is used to measure the first signal or send the second signal.

In an implementation, if the priority of the first time window is higher than the priority of the second time window, the first base station determines that the overlapping part between the first time window and the second time window is used to measure the first signal.

For example, if the priority of the SMTC window is higher than the priority of the STC window, the overlapping part between the SMTC window and the STC window belongs to the SMTC window, that is, the overlapping part between the SMTC window and the STC window is used to measure the SSB. Further, it may be specified that the STC window corresponding to the overlapping part does not take effect or muting is performed on the STC window.

In another implementation, if the priority of the second time window is higher than the priority of the first time window, the first base station determines that the overlapping part between the first time window and the second time window is used to send the second signal.

For example, if the priority of the STC window is higher than the priority of the SMTC window, the overlapping part between the SMTC window and the STC window belongs to the STC window, that is, the overlapping part between the SMTC window and the STC window is used to send the SSB. Further, it may be specified that the SMTC window corresponding to the overlapping part does not take effect or muting is performed on the SMTC window.

In the embodiments of the disclosure, the priorities of the first time window and the second time window may be determined in either of the following ways.

In a first way, the priorities of the first time window and the second time window are preset.

For example, it is preset (or agreed) that the priority of the first time window is higher than the priority of the second time window, then the first base station determines that the overlapping part between the first time window and the second time window is used to measure the first signal. In the specific implementation, the following application example 1 is for reference.

For example, it is preset (or agreed) that the priority of the second time window is higher than the priority of the first time window, then the first base station determines that the overlapping part between the first time window and the second time window is used to send the second signal. In the specific implementation, the following application example 2 is for reference.

In a second way, the priorities of the first time window and the second time window are determined according to the first indication information.

In an implementation, the first indication information is sent by a second base station to the first base station. The second base station is the parent node of the first base station, and can control and schedule the first base station. In the specific implementation, the second base station indicates priority information of the SMTC window and the STC window while configuring the SMTC and the STC for the first base station. In the specific implementation, the following application example 3 is for reference.

In an implementation, the first indication information may be a system message, or Radio Resource Control (RRC) signaling, or X2 signaling, etc.

In a third way, the priorities of the first time window and the second time window are determined according to a multi-hop parameter of the first base station, and the multi-hop parameter of the first base station is used to indicate a number of backhaul links established between the first base station and a target base station.

In an implementation, if a multi-hop parameter of the first base station is greater than or equal to a first threshold, the priority of the first time window is higher than the priority of the second time window; or, if the multi-hop parameter of the first base station is less than or equal to the first threshold, the priority of the second time window is higher than the priority of the first time window. In the specific implementation, the following application example 4 is for reference.

In another implementation, if the multi-hop parameter of the first base station is greater than or equal to the first threshold, the priority of the second time window is higher than the priority of the first time window; or, if the multi-hop parameter of the first base station is less than or equal to the first threshold, the priority of the first time window is higher than the priority of the second time window. In the specific implementation, the following application example 4 is for reference.

In a fourth way, the priorities of the first time window and the second time window are determined according to a size of the overlapping part between the first time window and the second time window, and/or proportions of the overlapping part to the first time window and the second time window.

In an implementation, if the size of the overlapping part is greater than or equal to a second threshold, the priority of the first time window is higher than the priority of the second time window; or, if the size of the overlapping part is less than or equal to the second threshold, the priority of the second time window is higher than the priority of the first time window. In the specific implementation, the following application example 5 is for reference.

In another implementation, if the size of the overlapping part is greater than or equal to the second threshold, the priority of the second time window is higher than the priority of the first time window; or, if the size of the overlapping part is less than or equal to the second threshold, the priority of the first time window is higher than the priority of the second time window. In the specific implementation, the following application example 5 is for reference.

In an implementation, if the proportion of the overlapping part to the first time window is greater than or equal to the proportion of the overlapping part to the second time window, the priority of the first time window is higher than the priority of the second time window; or, if the proportion of the overlapping part to the first time window is less than or equal to the proportion of the overlapping part to the second time window, the priority of the second time window is higher than the priority of the first time window. In the specific implementation, the following application example 5 is for reference.

In another implementation, if the proportion of the overlapping part to the first time window is greater than or equal to the proportion of the overlapping part to the second time window, the priority of the second time window is higher than the priority of the first time window; or, if the proportion of the overlapping part to the first time window is less than or equal to the proportion of the overlapping part to the second time window, the priority of the first time window is higher than the priority of the second time window. In the specific implementation, the following application example 5 is for reference.

In a fifth way, the priorities of the first time window and the second time window are determined according to the first configuration information and/or the second configuration information.

In the specific implementation, it may be determined, according to the period of the SMTC window and STC window configuration, whether the overlapping part belongs to the SMTC window or the STC window. For example, for the time window with a small period, the priority may be relatively low, and the impact of overlap is smaller than that of the time window with a large period.

In a sixth way, the priorities of the first time window and the second time window are determined according to a time unit where the overlapping part between the first time window and the second time window is located. The time unit includes at least one of: wireless frame, sub-frame or time slot.

In the specific implementation, the following application example 6 is for reference. When the overlapping part between the SMTC window and the STC window is in different wireless frames, sub-frames or time slots, the priorities of different SMTC windows and STC windows are defined. Taking the wireless frame as an example, it may be defined that for the wireless frame of SFN mod 2=0, the priority of the SMTC window is higher the priority of the STC window, while for the wireless frame of SFN mod 2=1, the opposite is true.

The technical solutions of the embodiments of the disclosure are illustrated below with the specific application examples.

### Application example 1

When the SMTC window and the STC window configured for the IAB base station overlap, the overlapping part belongs to the SMTC window.

Specifically, when the SMTC window and the STC window overlap, it may be specified that the overlapping part belongs to the SMTC window. This is equivalent to specifying that the priority of SMTC window configuration is higher than the priority of the STC window. When the configured SMTC window and STC window overlap at some time, priority is given to ensuring that the IAB base station discovers and measures other IAB base stations at the overlapping time, so that the IAB base station can discover the SSB sent by the other IAB base stations as soon as possible and obtain the result of backhaul link RSRP/RSRQ RRM measurement.

Further, for the STC window overlapping with the SMTC window, it may be specified that the STC window does not take effect or muting is performed on the STC window. In this case, the effective time window of the STC window is shortened due to overlapping with the SMTC window, and the SSBs of all beams may not be completely sent for other IAB base stations to perform discovery and measurement, so it may be specified that muting is performed on the STC window.

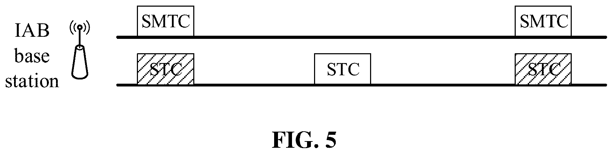

As shown in FIG. 5, when patterns of the SMTC window and the STC window overlap, muting is performed on the time window of the STC window.

The implementation process is as follows.
1. The IAB base station receives the configuration information of the SMTC and the STC, and obtains the time window (namely the SMTC window) for measuring the SSB and the time window (namely the STC window) for sending the SSB.
2. When the time window for measuring the SSB overlaps with the time window for sending the SSB, it is determined that the overlapping part belongs to the SMTC window.
3. The SSB is received and sent according to the determined time window.

Through the technical solution in the application example 1, when the configured SMTC window and STC window overlap at some time, priority is given to ensuring that the IAB base station discovers and measures other IAB base stations at this time, so that the IAB base station can discover the SSB sent by the other IAB base stations as soon as possible and obtain the result of backhaul link RSRP/RSRQ RRM measurement.

### Application example 2

When the SMTC window and the STC window configured for the IAB base station overlap, the overlapping part belongs to the STC window.

Specifically, when the SMTC window and the STC window overlap, it may be specified that the overlapping part belongs to the STC window. This is equivalent to specifying that the priority of STC window configuration is higher than the priority of the SMTC window. When the configured SMTC window and STC window overlap at some time, priority is given to ensuring that the IAB base station can send the SSB for other IAB base stations to perform discovery and measurement at the overlapping time, so that the other IAB base stations can discover the SSB sent by the IAB base station as soon as possible and obtain the result of backhaul link RSRP/RSRQ RRM measurement.

Further, for the SMTC window overlapping with the STC window, it may be specified that the SMTC window does not take effect or muting is performed on the SMTC window. In this case, the effective time window of the SMTC window is shortened due to overlapping with the STC window, and all SSBs in the window may not be completely received to discover and measure the SSB sent by other IAB base stations, so it may be specified that muting is performed on the SMTC window.

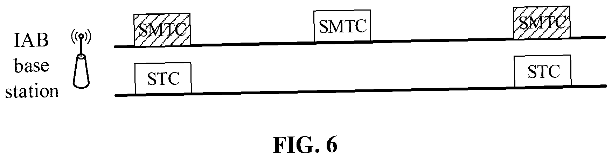

As shown in FIG. 6, when the patterns of the SMTC window and the STC window overlap, muting is performed on the time window of the SMTC window.

The implementation process is as follows.
1. The IAB base station receives the configuration information of the SMTC and the STC, and obtains the time window (namely the SMTC window) for measuring the SSB and the time window (namely the STC window) for sending the SSB.
2. When the time window for measuring the SSB overlaps with the time window for sending the SSB, it is determined that the overlapping part belongs to the STC window.
3. The SSB is received and sent according to the determined time window.

Through the technical solution of the application example 2, when the configured SMTC window and STC window overlap at some time, priority is given to ensuring that the IAB base station can send the SSB for other IAB base stations to perform discovery and measurement at the overlapping time, so that the other IAB base stations can discover the SSB sent by the IAB base station as soon as possible and obtain the result of backhaul link RSRP/RSRQ RRM measurement.

### Application example 3

It is indicated by indication information that when the SMTC window and the STC window configured for the IAB base station overlap, whether the overlapping part belongs to the SMTC window or the STC window.

Specifically, a control node indicates the priority information of the SMTC window and STC window configuration when configuring the SMTC window and the STC window for the IAB base station. When the time windows of the SMTC window and the STC window overlap, the IAB base station determines, according to the priority information, whether the overlapping part belongs to the SMTC window or the STC window. Here, when the configured SMTC window and STC window overlap at some time, the priorities of the SMTC window and the STC window are controlled by the control node. The control node configures the SMTC window and the STC window, and the signaling indicating the priority information may be a system message, RRC signaling, or X2 signaling, etc.

Further, when the time windows of the SMTC window and the STC window overlap, after it is determined according to the priority information that the overlapping part belongs to one of the SMTC window and the STC window, it may be specified that another one of the two time windows does not take effect, or muting is performed on that time window.

The implementation process is as follows.
1. The IAB base station receives the configuration information of the SMTC and the STC, and obtains the time window (namely the SMTC window) for measuring the SSB and the time window (namely the STC window) for sending the SSB.
2. The IAB base station obtains the indication information, and when the time window for measuring the SSB and the time window for sending the SSB overlap, the IAB base station determines, according to the indication information, that the overlapping part belongs to the SMTC window or the STC window.
3. The SSB is received and sent according to the determined time window.

Through the technical solution in the application example 3, the control node may control flexibly the priorities of the SMTC window and the STC window, and decide the priorities of the SMTC window and the STC window based on the actual network architecture and deployment.

### Application example 4

It is determined, according to the multi-hop parameter of the IAB base station, whether the overlapping part between the SMTC window and the STC window belongs to the SMTC window or the STC window.

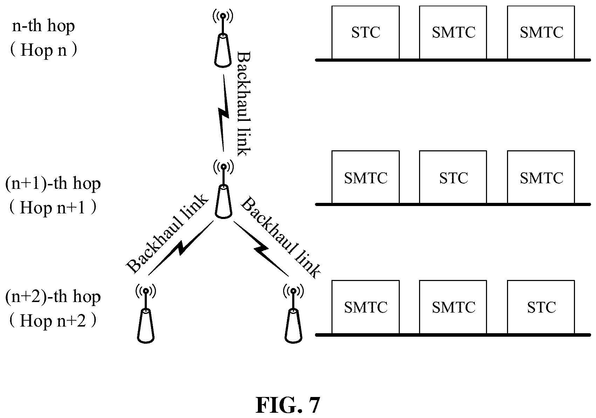

Specifically, in the IAB system, different IAB base stations have different multi-hop parameters, as shown in FIG. 7. In order to facilitate the discovery and measurement of the SSB between different IAB base stations, and due to the limitation of half duple of the IAB base station, the STC window and the SMTC window staggered in time may be configured accordingly. For a certain IAB base station, it has a multi-hop parameter, which is used to determine the number of backhaul that the IAB base station needs to establish with the IAB donor base station when the IAB base station establishes the backhaul link with the IAB donor base station. As shown in FIG. 7, if hop n is the IAB donor base station, the IAB base station with the multi-hop parameter Hop n+2 needs to establish the backhaul link with the IAB donor base station through 2 hops. In the embodiments of the disclosure, it may be specified that the multi-hop parameter of the IAB donor base station is 0, and the multi-hop parameter of the IAB base station that establishes a connection with the IAB donor base station through one backhaul link is 1, and so on.

For the base station with a small multi-hop parameter, such as the IAB base station with the multi-hop parameter 1, because the IAB base station with a large multi-hop parameter needs to establish the backhaul link through the IAB base station with the small multi-hop parameter, for the IAB base station with the small multi-hop parameter, when the time windows of the configured SMTC window and STC window overlap, the priority of the STC window configuration should be higher than the priority of the SMTC window configuration, so that the IAB base station with the small multi-hop parameter sends the SSB in time for the discovery and measurement by the IAB base station with the large multi-hop parameter, and establishes the backhaul link with the IAB base station with the small multi-hop parameter, especially when there are fewer IAB donor base stations in IAB network deployment, most of the IAB base stations need to establish the backhaul link with the IAB donor base station through multiple hops. For the IAB base station with the large multi-hop parameter, on the contrary, when the time windows of the configured SMTC window and STC window overlap, the priority of the SMTC window configuration should be higher than the priority of the STC window configuration.

On the other hand, another situation is that when there are many IAB donor base stations in the IAB network deployment, most of the IAB base stations need to establish the backhaul link with the IAB donor base station through one hop. So there are only a few IAB base stations with the large multi-hop parameter. For the majority of IAB base stations with the small multi-hop parameter, it is more important to discover and measure the SSB sent by other IAB base stations, such as the IAB donor base station, through the SMTC window as soon as possible. In this case, when the time windows of the configured SMTC window and STC window overlap, for the IAB base station with the small multi-hop parameter, the priority of the SMTC window configuration should be higher than the priority of the STC window configuration. For the IAB base station with the large multi-hop parameter, the priority of the SMTC window configuration may be higher than or lower than the priority of the STC window configuration.

The implementation process is as follows.
1. The IAB base station receives the configuration information of the SMTC and the STC, and obtains the time window (namely the SMTC window) for measuring the SSB and the time window (namely the STC window) for sending the SSB.
2. The IAB base station obtains multi-hop parameter information.
3. When the time window for measuring the SSB and the time window for sending the SSB overlap, it is determined, according to the multi-hop parameter of the IAB base station, that the overlapping part belongs to the SMTC window or the STC window.
4. The SSB is received and sent according to the determined time window.

Through the technical solution of the application example 4, when the priorities of the SMTC window and the STC window are determined according to the multi-hop parameter of the IAB base station, the priorities of the SMTC window and the STC window may be determined according to the role of the IAB base station in multiple hops of the IAB system, which may improve the reliability of the backhaul link in the network and reduce the time delay of establishing the backhaul link.

### Application example 5

It is determined, according to a size of the overlapping part between the SMTC window and the STC window of the IAB base station or configuration parameters of the SMTC window and the STC window, whether the overlapping part belongs to the SMTC window or the STC window.

Specifically, because the SMTC window and the STC window are configured independently, the length and period of their time windows may be different, and the impact of overlap on them is different. It is determined, according to a size of the overlapping part or the proportion of the overlapping part to each time window, whether the overlapping part belong to the SMTC window or the STC window. For example, if the length of time window of the configured SMTC window is larger than the length of the configured STC window, when they overlap, the overlap must have a greater impact on the time window of the STC window. In this case, there are two different schemes: first, the overlapping part belongs to the SMTC window; second, the overlapping part belongs to the STC window. The reason of the first scheme is that the impact on the STC window is large, and the non-overlapping part is not enough for sending the SSB, so muting is performed on the STC window. The reason of the second scheme is that the impact on the SMTC window is small, the non-overlapping part of the SMTC window may still receive part of the SSB, and the STC window may be guaranteed preferentially.

In addition, it may also be determined, according to the period of the SMTC window and STC window configuration, whether the overlapping part belongs to the SMTC window or the STC window. For the time window configured with a small period, the priority may be relatively low, and the impact of overlap is smaller than that of the time window with a large period.

The implementation process is as follows.
1. The IAB base station receives the configuration information of the SMTC and the STC, and obtains the time window (namely the SMTC window) for measuring the SSB and the time window (namely the STC window) for sending the SSB.
2. When the time window for measuring the SSB and the time window for sending the SSB overlap, it is determined whether the overlapping part belongs to the SMTC window or the STC window according to a size of time window, the period, or the size of the overlapping part of the SMTC window and the STC window.
3. The SSB is received and sent according to the determined time window.

Through the technical solution of the application example 5, the priorities of the time windows of the SMTC window and the STC window are determined according to the actual overlap and the configuration parameters of the SMTC window and the STC window, which may reduce the impact of overlap on receiving and sending the SSB.

### Application example 6

It is determined, according to the frame, sub-frame or time slot where the overlapping part between the SMTC window and the STC window of the IAB base station is located, whether the overlapping part belongs to the SMTC window or the STC window.

Specifically, when the overlapping part between the SMTC window and the STC window is in different wireless frames, sub-frames or time slots, the priorities of different SMTC windows and STC windows are defined. Taking the wireless frame as an example, it may be defined that for the wireless frame of SFN mod 2=0, the priority of the SMTC window is higher the priority of the STC window, while for the wireless frame of SFN mod 2=1, the opposite is true.

The implementation process is as follows.
1. The IAB base station receives the configuration information of the SMTC and the STC, and obtains the time window (namely the SMTC window) for measuring the SSB and the time window (namely the STC window) for sending the SSB.
2. The wireless frame, sub-frame or time slot where the overlapping part between the time window for measuring the SSB and the time window for sending the SSB is located is determined, and it is determined, according to the wireless frame, sub-frame or time slot, whether the overlapping part belongs to the SMTC window or the STC window.
3. The SSB is received and sent according to the determined time window.

Through the technical solution of the application example 6, different priorities may be defined in different wireless frames, sub-frames, or time slots based on the wireless frame, sub-frame, or time slot where the overlap occurs. One beneficial effect is that the priorities of measuring the SSB and sending the SSB are averaged in the time domain, so as to ensure the performance of discovery and measurement of the IAB base station based on the SSB.

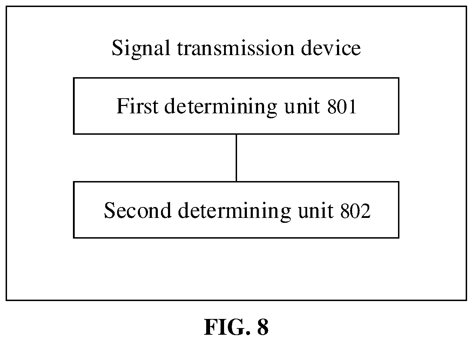

FIG. 8 is a structural schematic diagram of a signal transmission device provided by an embodiment of the disclosure, which is applied to the first base station. As shown in FIG. 8, the signal transmission device may include: a first determining unit 801 and a second determining unit 802.

The first determining unit 801 is configured to determine the first configuration information and the second configuration information, the first configuration information being used to determine the first time window for measuring the first signal, and the second configuration information being used to determine the second time window for sending the second signal.

The second determining unit 802 is configured to determine whether an overlapping part between the first time window and the second time window is used to measure the first signal or send the second signal.

In an implementation, the second determining unit 802 is configured to determine, according to the priorities of the first time window and the second time window, whether the overlapping part between the first time window and the second time window is used to measure the first signal or send the second signal.

In an implementation, the priority of the first time window is higher than the priority of the second time window,
the second determining unit 802 is configured to determine that the overlapping part between the first time window and the second time window is used to measure the first signal.

In an implementation, if the priority of the second time window is higher than the priority of the first time window,
the second determining unit 802 is configured to determine that the overlapping part between the first time window and the second time window is used to send the second signal.

In an implementation, the priorities of the first time window and the second time window are preset.

In an implementation, the priorities of the first time window and the second time window are determined according to the first indication information.

In an implementation, the first indication information is sent by a second base station to the first base station.

In an implementation, the priorities of the first time window and the second time window are determined according to a multi-hop parameter of the first base station, and the multi-hop parameter of the first base station is used to indicate a number of backhaul links established between the first base station and the target base station.

In an implementation, if the multi-hop parameter of the first base station is greater than or equal to a first threshold, the priority of the first time window is higher than the priority of the second time window; or,
if the multi-hop parameter of the first base station is less than or equal to the first threshold, the priority of the second time window is higher than the priority of the first time window.

In an implementation, if the multi-hop parameter of the first base station is greater than or equal to the first threshold, the priority of the second time window is higher than the priority of the first time window; or,
if the multi-hop parameter of the first base station is less than or equal to the first threshold, the priority of the first time window is higher than the priority of the second time window.

In an implementation, the priorities of the first time window and the second time window are determined according to a size of the overlapping part between the first time window and the second time window, and/or proportions of the overlapping part to the first time window and the second time window.

In an implementation, if the size of the overlapping part is greater than or equal to a second threshold, the priority of the first time window is higher than the priority of the second time window; or,
if the size of the overlapping part is less than or equal to the second threshold, the priority of the second time window is higher than the priority of the first time window.

In an implementation, if the size of the overlapping part is greater than or equal to a second threshold, the priority of the second time window is higher than the priority of the first time window; or,
if the size of the overlapping part is less than or equal to the second threshold, the priority of the first time window is higher than the priority of the second time window.

In an implementation, if the proportion of the overlapping part to the first time window is greater than or equal to the proportion of the overlapping part to the second time window, the priority of the first time window is higher than the priority of the second time window; or,
if the proportion of the overlapping part to the first time window is less than or equal to the proportion of the overlapping part to the second time window, the priority of the second time window is higher than the priority of the first time window.

In an implementation, if the proportion of the overlapping part to the first time window is greater than or equal to the proportion of the overlapping part to the second time window, the priority of the second time window is higher than the priority of the first time window; or,
if the proportion of the overlapping part to the first time window is less than or equal to the proportion of the overlapping part to the second time window, the priority of the first time window is higher than the priority of the second time window.

In an implementation, the priorities of the first time window and the second time window are determined according to the first configuration information and/or the second configuration information.

In an implementation, the priorities of the first time window and the second time window are determined according to a time unit where the overlapping part between the first time window and the second time window is located.

In an implementation, the time unit includes at least one of: wireless frame, sub-frame or time slot.

In an implementation, the first signal is the SSB measured by the first base station, and the second signal is the SSB sent by the first base station.

It should be understood by those skilled in the art that the related descriptions about the signal transmission device of the embodiments of the disclosure may be understood with reference to the related descriptions about the signal transmission method of the embodiments of the disclosure.

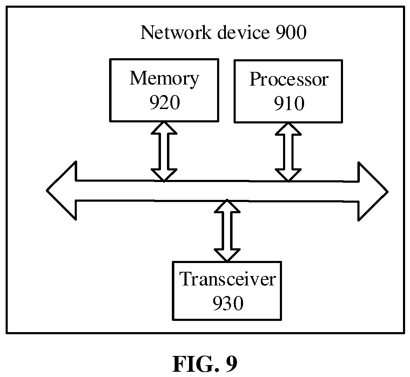

FIG. 9 is a schematic structure diagram of a network device 900 provided by an embodiment of the disclosure. The communication device may be a base station, such as the IAB base station. The network device 900 shown in FIG. 9 includes a processor 910, and the processor 910 may call and run a computer program in a memory to implement the method in the embodiments of the disclosure.

Optionally, as illustrated in FIG. 9, the network device 900 further includes the memory 920. The processor 910 may call and run the computer program in the memory 920 to implement the method in the embodiments of the disclosure.

The memory 920 may be a separate device independent of the processor 910, and may also be integrated in the processor 910.

Optionally, as illustrated in FIG. 9, the network device 900 further includes the transceiver 930. The processor 910 may control the transceiver 930 to communicate with other devices, specifically, the transceiver may send information or data to other devices, or receive information or data sent by the other devices.

The transceiver 930 may include a transmitter and a receiver. The transceiver 930 may further include an antenna. The number of the antenna may be one or more.

Optionally, the network device 900 may be specifically the network device in the embodiments of the disclosure, and the network device 900 may implement the corresponding flows, implemented by the network device, in each method of the embodiments of the disclosure, which will not be elaborated herein for simplicity.

Optionally, the network device 900 may be specifically the mobile terminal/terminal of the embodiments of the disclosure, and the network device 900 may implement corresponding flows implemented by the mobile terminal/terminal in each method of the embodiments of the disclosure. For simplicity, elaborations are omitted herein.

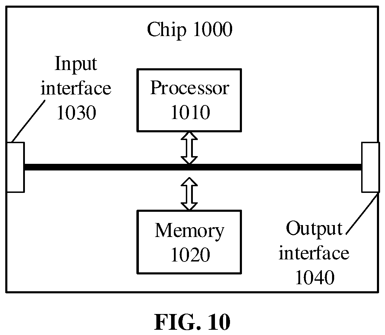

FIG. 10 is a schematic structure diagram of a chip according to an embodiment of the disclosure. The chip 1000 shown in FIG. 10 includes a processor 1010, and the processor 1010 may call and run a computer program in a memory to implement the method in the embodiments of the disclosure.

Optionally, as shown in FIG. 10, the chip 1000 may further include the memory 1020. The processor 1010 may call and run the computer program in the memory 1020 to implement the method in the embodiments of the disclosure.

The memory 1020 may be a separate device independent of the processor 1010, and may also be integrated in the processor 1010.

Optionally, the chip 1000 may further include an input interface 1030. The processor 1010 may control the input interface 1030 to communicate with other devices or chips; specifically, the input interface may acquire information or data sent by other devices or chips.

Optionally, the chip 1000 may further include an output interface 1040. The processor 1010 may control the output interface 1040 to communicate with other devices or chips; specifically, the output interface may output information or data to other devices or chips.

Optionally, the chip may be applied to the network device of the embodiments of the disclosure, and the chip may implement corresponding flows implemented by the network device in each method of the embodiments of the disclosure. For simplicity, elaborations are omitted herein.

Optionally, the chip may be applied to the mobile terminal/terminal of the embodiment of the disclosure, and the chip may implement corresponding flows implemented by the mobile terminal/terminal in each method of the embodiments of the disclosure. For simplicity, elaborations are omitted herein.

It is to be understood that the chip mentioned in the embodiment of the disclosure may also be referred to as a system-level chip, a system chip, a chip system or a system on chip, etc.

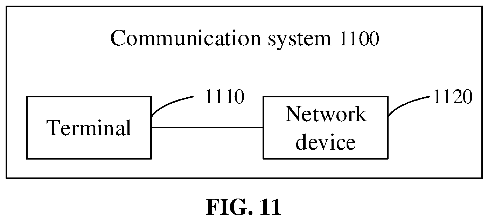

FIG. 11 is a schematic block diagram of a communication system 1100 according to an embodiment of the disclosure. As shown in FIG. 11, the communication system 1100 includes a terminal 1110 and a network device 1120.

The terminal 1110 may be configured to realize corresponding functions realized by the terminal in the method, and the network device 1120 may be configured to realize corresponding functions realized by the network device in the method. For simplicity, elaborations are omitted herein.

It is to be understood that the processor in the embodiment of the disclosure may be an integrated circuit chip and has a signal processing capability. In an implementation process, each step of the method embodiment may be completed by an integrated logical circuit of hardware in the processor or an instruction in a software form. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, step and logical block diagram disclosed in the embodiments of the disclosure may be implemented or executed. The universal processor may be a microprocessor, or the processor may also be any conventional processor and the like. The steps of the method disclosed in combination with the embodiments of the disclosure may be directly embodied to be executed and completed by a hardware decoding processor or executed and completed by a combination of hardware and software modules in the decoding processor. The software module may be located in a mature storage medium in this field such as an RAM, a flash memory, an ROM, a PROM or EEPROM and a register. The storage medium is located in a memory, and the processor reads information in the memory, and completes the steps of the methods in combination with hardware.

It can be understood that the memory in the embodiment of the disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

It is to be understood that the memories above mentioned are exemplarily but unlimitedly described; for example, the memories in the embodiments of the disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). That is, the memories in the embodiments of the disclosure are intended to include, but not limited to, memories of these and any other proper types.

The embodiments of the disclosure also provide a computer-readable storage medium, which is configured to store a computer program.

Optionally, the computer-readable storage medium may be applied to a network device in the embodiments of the disclosure, and the computer program enables a computer to perform corresponding flows implemented by the network device in each method of the embodiments of the disclosure. For simplicity, elaborations are omitted herein.

Optionally, the computer-readable storage medium may be applied to a mobile terminal/terminal in the embodiments of the disclosure, and the computer program enables a computer to perform corresponding flows implemented by the mobile terminal/terminal in each method of the embodiments of the disclosure. For simplicity, elaborations are omitted herein.

The embodiments of the disclosure also provide a computer program product, which includes a computer program instruction.

Optionally, the computer program product may be applied to a network device in the embodiments of the disclosure, and the computer program instruction enables a computer to perform corresponding flows implemented by the network device in each method of the embodiments of the disclosure. For simplicity, elaborations are omitted herein.

Optionally, the computer program product may be applied to a mobile terminal/terminal in the embodiments of the disclosure, and the computer program instruction enables the computer to perform corresponding flows implemented by the mobile terminal/terminal in each method of the embodiments of the disclosure. For simplicity, elaborations are omitted herein.

The embodiments of the disclosure also provide a computer program.

Optionally, the computer program may be applied to a network device in the embodiments of the disclosure, and the computer program runs in a computer to enable the computer to perform corresponding flows implemented by the network device in each method of the embodiments of the disclosure. For simplicity, elaborations are omitted herein.

Optionally, the computer program may be applied to a mobile terminal/terminal in the embodiments of the disclosure, and the computer program runs in the computer to enable the computer to perform corresponding flows implemented by the mobile terminal/terminal in each method of the embodiments of the disclosure. For simplicity, elaborations are omitted herein.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiment and will not be elaborated herein for convenient and brief description

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to perform all or part of the steps of the method in each embodiment of the disclosure. The abovementioned storage medium includes: various media capable of storing program codes such as a U disk, a mobile hard disk, a ROM, a RAM, a magnetic disk or an optical disk.

The above are only specific implementations of the disclosure and not intended to limit the scope of protection of the disclosure. Any variations or replacements apparent to those skilled in the art within the technical scope disclosed in the disclosure shall fall within the scope of protection of the disclosure. Therefore, the scope of protection of the disclosure shall be subject to the scope of protection of the claims.

## Claims

1. A signal transmission method, comprising:
determining, by a first base station, first configuration information and second configuration information, the first configuration information being used to determine a first time window for measuring a first signal, and the second configuration information being used to determine a second time window for sending a second signal; and
determining, by the first base station, whether an overlapping part between the first time window and the second time window is used to measure the first signal or send the second signal.

2. The method of claim 1, wherein determining, by the first base station, whether the overlapping part between the first time window and the second time window is used to measure the first signal or send the second signal comprises:
determining, by the first base station according to priorities of the first time window and the second time window, whether the overlapping part between the first time window and the second time window is used to measure the first signal or send the second signal.

3. The method of claim 2, wherein the priority of the first time window is higher than the priority of the second time window, and
determining, by the first base station, that the overlapping part between the first time window and the second time window is used to measure the first signal.

4. The method of claim 2, wherein the priority of the second time window is higher than the priority of the first time window, and
determining, by the first base station, that the overlapping part between the first time window and the second time window is used to send the second signal.

5. The method of any one of claims 2 to 4, wherein the priorities of the first time window and the second time window are preset.

6. The method of any one of claims 2 to 4, wherein the priorities of the first time window and the second time window are determined according to first indication information.

7. The method of claim 6, wherein the first indication information is sent by a second base station to the first base station.

8. The method of any one of claims 2 to 4, wherein the priorities of the first time window and the second time window are determined according to a multi-hop parameter of the first base station, and the multi-hop parameter of the first base station is used to indicate a number of backhaul links established between the first base station and a target base station.

9. The method of claim 8, wherein:
if the multi-hop parameter of the first base station is greater than or equal to a first threshold, the priority of the first time window is higher than the priority of the second time window; or,
if the multi-hop parameter of the first base station is less than or equal to the first threshold, the priority of the second time window is higher than the priority of the first time window.

10. The method of claim 8, wherein:
if the multi-hop parameter of the first base station is greater than or equal to the first threshold, the priority of the second time window is higher than the priority of the first time window; or,
if the multi-hop parameter of the first base station is less than or equal to the first threshold, the priority of the first time window is higher than the priority of the second time window.

11. The method of any one of claims 2 to 4, wherein the priorities of the first time window and the second time window are determined according to a size of the overlapping part between the first time window and the second time window, and/or proportions of the overlapping part to the first time window and the second time window.

12. The method of claim 11, wherein:
if the size of the overlapping part is greater than or equal to a second threshold, the priority of the first time window is higher than the priority of the second time window; or,
if the size of the overlapping part is less than or equal to the second threshold, the priority of the second time window is higher than the priority of the first time window.

13. The method of claim 11, wherein:
if the size of the overlapping part is greater than or equal to a second threshold, the priority of the second time window is higher than the priority of the first time window; or,
if the size of the overlapping part is less than or equal to the second threshold, the priority of the first time window is higher than the priority of the second time window.

14. The method of claim 11, wherein:
if the proportion of the overlapping part to the first time window is greater than or equal to the proportion of the overlapping part to the second time window, the priority of the first time window is higher than the priority of the second time window; or,
if the proportion of the overlapping part to the first time window is less than or equal to the proportion of the overlapping part to the second time window, the priority of the second time window is higher than the priority of the first time window.

15. The method of claim 11, wherein:
if the proportion of the overlapping part to the first time window is greater than or equal to the proportion of the overlapping part to the second time window, the priority of the second time window is higher than the priority of the first time window; or,
if the proportion of the overlapping part to the first time window is less than or equal to the proportion of the overlapping part to the second time window, the priority of the first time window is higher than the priority of the second time window.

16. The method of any one of claims 2 to 4, wherein the priorities of the first time window and the second time window are determined according to the first configuration information and/or the second configuration information.

17. The method of any one of claims 2 to 4, wherein the priorities of the first time window and the second time window are determined according to a time unit where the overlapping part between the first time window and the second time window is located.

18. The method of claim 17, wherein the time unit comprises at least one of: wireless frame, sub-frame or time slot.

19. The method of any one of claims 1 to 18, wherein the first signal is a Synchronization Signal Block (SSB) measured by the first base station, and the second signal is an SSB sent by the first base station.

20. A signal transmission device, applied to a first base station, comprising:
a first determining unit, configured to determine first configuration information and second configuration information, the first configuration information being used to determine a first time window for measuring a first signal, and the second configuration information being used to determine a second time window for sending a second signal; and
a second determining unit, configured to determine whether an overlapping part between the first time window and the second time window is used to measure the first signal or send the second signal.

21. The device of claim 20, wherein the second determining unit is configured to determine, according to priorities of the first time window and the second time window, whether the overlapping part between the first time window and the second time window is used to measure the first signal or send the second signal.

22. The device of claim 21, wherein the priority of the first time window is higher than the priority of the second time window, and
the second determining unit is configured to determine that the overlapping part between the first time window and the second time window is used to measure the first signal.

23. The device of claim 21, wherein the priority of the second time window is higher than the priority of the first time window, and
the second determining unit is configured to determine that the overlapping part between the first time window and the second time window is used to send the second signal.

24. The device of any one of claims 21 to 23, wherein the priorities of the first time window and the second time window are preset.

25. The device of any one of claims 21 to 23, wherein the priorities of the first time window and the second time window are determined according to first indication information.

26. The device of claim 25, wherein the first indication information is sent by a second base station to the first base station.

27. The device of any one of claims 21 to 23, wherein the priorities of the first time window and the second time window are determined according to a multi-hop parameter of the first base station, and the multi-hop parameter of the first base station is used to indicate a number of backhaul links established between the first base station and a target base station.

28. The device of claim 27, wherein:
if the multi-hop parameter of the first base station is greater than or equal to a first threshold, the priority of the first time window is higher than the priority of the second time window; or,
if the multi-hop parameter of the first base station is less than or equal to the first threshold, the priority of the second time window is higher than the priority of the first time window.

29. The device of claim 27, wherein:
if the multi-hop parameter of the first base station is greater than or equal to the first threshold, the priority of the second time window is higher than the priority of the first time window; or,
if the multi-hop parameter of the first base station is less than or equal to the first threshold, the priority of the first time window is higher than the priority of the second time window.

30. The device of any one of claims 21 to 23, wherein the priorities of the first time window and the second time window are determined according to a size of the overlapping part between the first time window and the second time window, and/or proportions of the overlapping part to the first time window and the second time window.

31. The device of claim 30, wherein:
if the size of the overlapping part is greater than or equal to a second threshold, the priority of the first time window is higher than the priority of the second time window; or,
if the size of the overlapping part is less than or equal to the second threshold, the priority of the second time window is higher than the priority of the first time window.

32. The device of claim 30, wherein:
if the size of the overlapping part is greater than or equal to a second threshold, the priority of the second time window is higher than the priority of the first time window; or,
if the size of the overlapping part is less than or equal to the second threshold, the priority of the first time window is higher than the priority of the second time window.

33. The device of claim 30, wherein:
if the proportion of the overlapping part to the first time window is greater than or equal to the proportion of the overlapping part to the second time window, the priority of the first time window is higher than the priority of the second time window; or,
if the proportion of the overlapping part to the first time window is less than or equal to the proportion of the overlapping part to the second time window, the priority of the second time window is higher than the priority of the first time window.

34. The device of claim 30, wherein:
if the proportion of the overlapping part to the first time window is greater than or equal to the proportion of the overlapping part to the second time window, the priority of the second time window is higher than the priority of the first time window; or,
if the proportion of the overlapping part to the first time window is less than or equal to the proportion of the overlapping part to the second time window, the priority of the first time window is higher than the priority of the second time window.

35. The device of any one of claims 21 to 23, wherein the priorities of the first time window and the second time window are determined according to the first configuration information and/or the second configuration information.

36. The device of any one of claims 21 to 23, wherein the priorities of the first time window and the second time window are determined according to a time unit where the overlapping part between the first time window and the second time window is located.

37. The device of claim 36, wherein the time unit comprises at least one of: wireless frame, sub-frame or time slot.

38. The device of any one of claims 20 to 37, wherein the first signal is a Synchronization Signal Block (SSB) measured by the first base station, and the second signal is an SSB sent by the first base station.

39. A network device, comprising: a processor and a memory, the memory being configured to store a computer program, and the processor being configured to call and run the computer program stored in the memory to perform a method of any one of claims 1 to 19.

40. A chip, comprising: a processor, configured to call a computer program from a memory and run the computer program to enable a device provided with the chip to perform a method of any one of claims 1 to 19.

41. A computer-readable storage medium, configured to store a computer program, the computer program causing a computer to perform a method of any one of claims 1 to 19.

42. A computer program product, comprising a computer program instruction causing a computer to perform a method of any one of claims 1 to 19.

43. A computer program, causing a computer to perform a method of any one of claims 1 to 19.
